# EUROPÄISCHE PATENTSCHRIFT

(11) **EP 2 818 337 B1**
(45) Veröffentlichungstag und Bekanntmachung des Hinweises auf die Patenterteilung: **05.05.2021**
(21) Anmeldenummer: 14170154.0
(22) Anmeldetag: 28.05.2014
(51) Int. Cl.: B60C 23/00, A01B 63/112

(54) **Landwirtschaftliches Fahrzeug**
Agricultural vehicle
Véhicule agricole

(30) Priorität: 24.06.2013 DE 102013106548
(43) Veröffentlichungstag der Anmeldung: 31.12.2014
(73) Patentinhaber: CLAAS Tractor SAS, 78141 Velizy-Villacoublay (FR)
(72) Erfinder: Wieckhorst, Jan Carsten, 33098 Paderborn (DE)
(74) Vertreter: CLAAS Gruppe

(56) Entgegenhaltungen:
- WO-A1-2013/013917
- US-A- 6 144 295

## Beschreibung

Die Erfindung betrifft ein landwirtschaftliches Fahrzeug mit einer Reifendruckbefüllanlage sowie einer elektronischen Steuereinheit zur Einstellung des Reifendrucks des Fahrzeugs in Abhängigkeit sensorisch erfasster Betriebsparameter des Fahrzeugs gemäß dem Oberbegriff des Anspruchs 1.

Aus dem Stand der Technik sind landwirtschaftliche Fahrzeuge wie Traktoren, Mähdrescher, Feldhäcksler und dergleichen bekannt, die mit verschiedenartig ausgeprägten Reifendruckbefüllanlagen ausgestattet sind, um es dem Bediener zu ermöglichen, einen gewünschten Reifendruck einzustellen. Denn bekanntermaßen lassen sich landwirtschaftliche Fahrzeuge durch Wahl eines geeigneten Reifendrucks an den jeweiligen Einsatzzweck anpassen. So werden beispielsweise Traktoren auf dem Feld mit einem niedrigeren Reifendruck betrieben als bei Straßenfahrt, um bei Feldfahrt durch eine erhöhte Aufstandsfläche (relativ geringerer Reifendruck) die Bodenbeanspruchung und damit Bodenverdichtung gering zu halten. Andererseits wird bei Straßenfahrt (relativ höherer Reifendruck) durch einen geringeren Rollwiderstand der Reifen-Boden-Paarung in erheblichem Maße Kraftstoff eingespart. Mit dem vereinfachenden Begriff "Reifendruck" sei im Rahmen dieser Beschreibung der innerhalb eines Reifens herrschende "Reifeninnendruck" gemeint.

Trotz Vorhandenseins bekannter Reifendruckbefüllanlagen - und somit der technischen Möglichkeit der Einstellung eines gewünschten Reifendrucks - besteht für den Fahrzeugbediener eine Schwierigkeit darin, einen für den jeweiligen Einsatzzweck auch tatsächlich geeigneten Reifendruck zu wählen. Für die Wahl eines für einen bestimmten Einsatzzweck geeigneten Reifendrucks sind zahlreiche unterschiedliche Faktoren zu berücksichtigen, die sich zudem während eines Arbeitseinsatzes ändern können. So muss beispielsweise bei der Wahl des Reifendrucks sichergestellt werden, dass eine vom Reifenhersteller vorgegebene sogenannte Reifentragfähigkeitsgrenze nicht überschritten wird. Als Reifentragfähigkeitsgrenze wird dabei der minimal zulässige Reifendruck bezeichnet, welcher für eine bestimmte Radlast und Fahrgeschwindigkeit des Fahrzeugs zulässig ist.

Ein für eine bestimmte Einsatzsituation bevorzugt zu wählender Reifendruck hängt aber nicht nur von Randbedingungen wie Fahrgeschwindigkeit und Radlast ab, sondern hängt insbesondere auch davon ab, welches Ziel mit der Anpassung des Reifendrucks eigentlich verfolgt werden soll. Selbst für erfahrene Fahrzeugbediener kann es schwierig sein, einen Reifendruck zu wählen, welcher neben Erfüllung von äußeren Randbedingungen auch eine besonders geeignete Einstellung beispielsweise für die Erzielung eines möglichst geringen Kraftstoffverbrauchs oder einer möglichst hohen Flächenleistung darstellt.

Aus US 6,144,295 A ist eine Reifendruckregelanlage bekannt, welche eine automatische Anpassung des Reifendruckes an sich verändernde Radlasten ermöglicht, wobei die Reifendruckregelanlage zu zusätzlich zu einem manuellen Modus einen automatischen Modus auf, welcher eine radlastabhängige Regelung des Reifendruckes ermöglicht.

Aus der WO 2013/013917 A1 ist ein Steuersystem für einen Traktor bekannt, welches es einem Bediener mit Hilfe eines Anzeigemittels ermöglicht, eine optimale Achslastverteilung für einen Traktor herzustellen, wobei dem Bediener neben einem optimalen Gewicht des Traktors auch dessen Achslasten angezeigt werden. Einen angemessenen Reifendruck kann der Bediener aus einer Tabelle entnehmen, welche ebenfalls anzeigbar ist.

Es ist eine Aufgabe der vorliegenden Erfindung, ein landwirtschaftliches Fahrzeug anzugeben, das eine selbsttätige Unterstützung für die Wahl eines geeigneten Reifendrucks in verschiedenen Einsatzsituationen bietet und somit den Bediener des Fahrzeugs von dieser Tätigkeit entlastet.

Die genannte Aufgabe wird gelöst durch ein landwirtschaftliches Fahrzeug mit den Merkmalen des Anspruchs 1. Dieses zeichnet sich dadurch aus, dass die Steuereinheit in verschiedenen, von einem Bediener auswählbaren Betriebsmodi betreibbar ist, wobei durch Auswahl eines der Betriebsmodi der Reifendruck unter Berücksichtigung einer diesem Betriebsmodus zugeordneten Regelstrategie geregelt wird.

Erfindungsgemäß ist dabei zunächst erkannt worden, dass landwirtschaftliche Fahrzeuge in der Praxis durchaus mit unterschiedlicher strategischer Zielsetzung des jeweiligen Arbeitseinsatzes betrieben werden. Beispielsweise kann es gewünscht sein, bei einer Feldfahrt eine möglichst geringe Beanspruchung (insbesondere: Verdichtung) des Bodens zu erzielen, um diesen zu schonen. Alternativ kann es gewünscht sein, einen Arbeitseinsatz mit möglichst hoher Effizienz (gemeint: möglichst geringem Kraftstoffverbrauch) durchzuführen. Wiederum alternativ kann es gewünscht sein, bei einem Arbeitseinsatz möglichst hohe Triebkraft bereitzustellen, um beispielsweise eine hohe Flächenleistung zu erzielen. Dabei ist weiterhin erkannt worden, dass sich bei Zugarbeiten auf dem Feld unter Umständen der Reifendruck für minimale Bodenverdichtung vom Reifendruck für maximale Effizienz unterscheidet. Andererseits ist für minimale Bodenverdichtung zwar grundsätzlich der geringste aufgrund der Reifentragfähigkeit zulässige Druck zu wählen, jedoch stellt dieser nicht zwingenderweise auch das Optimum für maximale Effizienz oder Triebkraft des Fahrzeugs dar.

Zur Berücksichtigung der unterschiedlichen im Arbeitseinsatz verfolgten strategischen Ziele lässt sich die Steuereinheit des erfindungsgemäßen Fahrzeugs durch Bedienerauswahl in verschiedenen Betriebsmodi betreiben. Abhängig vom gewählten Betriebsmodus regelt die Steuereinheit dann gemäß der diesem Betriebsmodus zugeordneten Regelstrategie den Reifendruck. So ist vorteilhaft gewährleistet, dass der Bediener von der Überwachung und/oder Einstellung des Reifendrucks entlastet ist und dass der Reifendruck entsprechend der vom Bediener verfolgten Zielsetzung selbständig geregelt wird. Daraus ergibt sich zugleich der Vorteil, dass die Luftbefüllung des Reifens unabhängig vom Erfahrungsschatz des Bedieners und/oder dessen subjektiver Situationsbeurteilung ist.

Grundsätzlich sind verschiedene vom Bediener auswählbare Betriebsmodi denkbar, um die diesen jeweils zugeordneten Regelstrategien auszuführen. Die Auswahl könnte vorteilhaft über eine Bedienerschnittstelle wie beispielsweise eine in einer Fahrerkabine des Fahrzeugs angeordnete Bedienoberfläche erfolgen.

Gemäß einer vorteilhaften Weiterbildung des Fahrzeugs ist die Steuereinheit in einem Betriebsmodus betreibbar, in welchem die Steuereinheit den Reifendruck mit dem Ziel hoher Effizienz des Fahrzeugs regelt. Eine derartige Regelstrategie dient dazu, mit dem Fahrzeug energieeffizient, insbesondere kraftstoffsparend zu arbeiten.

Vorteilhaft verfügt das Fahrzeug dabei über Mittel zur Erfassung eines Fahrwerkwirkungsgrads und eines Traktionskoeffizienten, wobei die Steuereinheit im Rahmen eines Vorgangs zur Effizienzsteigerung betreibbar ist, unter Berücksichtigung der Reifentragfähigkeitsgrenze einen Reifendruck einzustellen, für den sich ein maximaler Fahrwerkwirkungsgrad über dem Traktionskoeffizienten ergibt. Dabei gelten die folgenden Definitionen:
Der Fahrwerkwirkungsgrad entspricht dem Verhältnis aus Radzugleistung gegenüber mechanischer Eingangsleistung des Rads. Alternativ lässt sich der Fahrwerkwirkungsgrad auch mit den achsbezogenen Größen Achszugleistung und mechanischer Eingangsleistung in die Achse oder den auf das Gesamtfahrzeug bezogenen Größen Gesamtzugleistung des Fahrzeugs und mechanischer Eingangsleistung des Fahrwerks berechnen.

Der Traktionskoeffizient entspricht dem Verhältnis aus Radtriebkraft gegenüber der Radlast. Alternativ lässt sich der Traktionskoeffizient auch mit den achsbezogenen Größen Achstriebkraft und Achslast oder den auf das Gesamtfahrzeug bezogenen Größen Zugkraft des Fahrzeugs und Gesamtgewichtskraft des Fahrzeugs berechnen.

Um die genannten Größen zu ermitteln, ist das Fahrzeug mit geeigneter Sensorik ausgestattet. Diese beinhaltet beispielsweise Sensoren zur Erfassung von Reifendruck, Raddrehzahl, Raddrehmoment, Radlast, Radtriebkraft und Fahrgeschwindigkeit des Fahrzeugs. Alternativ oder ergänzend können - eine entsprechende Umrechnung vorausgesetzt - statt radbezogener Sensoren auch achsbezogene oder auf das Gesamtfahrzeug bezogene Sensoren zum Einsatz kommen, d.h. Sensoren zur Erfassung von Achsdrehzahl oder Getriebeausgangsdrehzahl, von Achsdrehmoment oder Getriebeausgangsdrehmoment, von Achslast oder Gesamtlast, von Achstriebkraft oder Gesamtzugkraft des Fahrzeugs.

Dabei ist vorteilhaft die Steuereinheit betreibbar, im Rahmen des Vorgangs zur Effizienzsteigerung den Reifendruck zunächst insbesondere bis an eine Reifentragfähigkeitsgrenze abzusenken, um im Anschluss den Reifendruck einzustellen, für den ein maximaler Fahrwerkwirkungsgrad gemessen wird. Wird bereits vor Erreichen der Reifentragfähigkeitsgrenze von der Steuereinheit ein maximaler Fahrwerkwirkungsgrad erkannt (insbesondere aufgrund Überschreiten eines Maximalwerts), so kann die Steuereinheit bevorzugt schon vor dem vollständigen Absenken auf die Reifentragfähigkeitsgrenze den Reifendruck einstellen, für den der maximale Fahrwerkwirkungsgrad erreicht wird, um eine schnellere Anpassung zu erzielen. Der Reifendruck, für den der maximale Fahrwerkwirkungsgrad erreicht wird, muss nicht zwingendermaßen der minimal aufgrund der Reifentragfähigkeit mögliche Reifendruck sein. Beispielsweise kann es abhängig von der Bodenbeschaffenheit möglich sein, dass mit einem über dem minimal aufgrund der Reifentragfähigkeit möglichen Reifendruck liegenden Reifendruck ein höherer Fahrwerkwirkungsgrad erzielt wird. In vorteilhafter Weise wird dabei der Fahrwerkwirkungsgrad laufend ermittelt, wobei sich die Steuereinheit an einem gebildeten Mittelwert orientiert.

Weiterhin ist es denkbar, dass die Steuereinheit betreibbar ist, durch Vorgabe einer Fahrgeschwindigkeit das Fahrzeug in einem Betriebspunkt mit maximalem Fahrwerkwirkungsgrad zu betreiben. Ein solcher Betrieb ist möglich, da der Verlauf des Fahrwerkwirkungsgrads über dem Traktionskoeffizienten aufgrund von Schwankungen während Zugarbeiten auf dem Feld (variierende Arbeitstiefe von Anbaugeräten, variierende Bodenfestigkeit) zumindest bereichsweise bekannt ist. Zudem wird beim Absenken des Anbaugeräts in den Boden am Vorgewende ein großer Teil der Traktionskoeffizienten-Fahrwerkwirkungsgradkurve durchlaufen. Die Steuereinheit kann somit den Betriebspunkt durch Variation der Fahrgeschwindigkeit verschieben, so dass dieser im Bereich des maximalen Fahrwerkwirkungsgrads liegt. Dabei führt eine Verringerung der Arbeitsgeschwindigkeit zur Abnahme der erforderlichen Zugkraft und damit des Traktionskoeffizienten, während eine Erhöhung der Arbeitsgeschwindigkeit eine Zunahme von Zugkraft und Traktionskoeffizienten bedingt.

Eine solche Vorgabe einer Fahrgeschwindigkeit kann allgemein in Form einer Empfehlung an den Bediener und/oder in Form eines direkten Eingriffs in den Fahrregler des Fahrzeugs erfolgen.

Alternativ könnte sich die Vorgabe einer Fahrgeschwindigkeit auf einen Betriebspunkt mit festlegbarem Abstand zum maximalen Fahrwerkwirkungsgrad beziehen, wodurch ein Kompromiss zwischen Effizienz und Flächenleistung erreichbar wäre.

Da die Kraftschlussbedingungen ständig variieren, ist es zweckmäßig, den Fahrwerkwirkungsgrad mittels der Sensorik laufend zu ermitteln, wobei sich die Steuereinheit an einem gebildeten Mittelwert orientiert. Ist der Reifendruck einmal eingestellt, entscheidet die Steuereinheit anhand von Änderungen der Lage des gemittelten Fahrwerkwirkungsgrads über dem Traktionskoeffizienten, ob es sinnvoll ist, den Reifendruck nachzuregeln. Eventuell kann der zu einem Fahrwerkwirkungsgrad und Traktionskoeffizient zugehörige Schlupf einen Hinweis für eine erneute Anpassung geben.

Zur Realisierung der Regelstrategie Effizienz ist es denkbar, die Traktion rad- oder achsindividuell oder für das Gesamtfahrzeug zu optimieren. Zudem ist es denkbar, die Traktionsbedingungen der Vorderachse zumindest teilweise aus den Werten der Hinterachse zu schätzen.

Gemäß einer vorteilhaften Weiterbildung des Fahrzeugs ist die Steuereinheit in einem Betriebsmodus betreibbar, in welchem die Steuereinheit den Reifendruck mit dem Ziel hoher Traktion des Fahrzeugs regelt. Eine derartige Regelstrategie dient insbesondere dazu, mit dem Fahrzeug eine hohe Flächenleistung zu erzielen.

Vorteilhaft verfügt das Fahrzeug dabei zumindest über Mittel zur Erfassung eines Traktionskoeffizienten, wobei die Steuereinheit im Rahmen eines Vorgangs zur Steigerung der Traktion betreibbar ist, unter Berücksichtigung der Reifentragfähigkeitsgrenze einen Reifendruck einzustellen, für den sich eine maximale Triebkraft für eine gegebene Radlast ergibt.

Um den Traktionskoeffizienten zu ermitteln ist das Fahrzeug mit geeigneter Sensorik ausgestattet. Diese beinhaltet beispielsweise Sensoren zur Erfassung von Reifendruck, Raddrehzahl, Raddrehmoment, Radlast, Radtriebkraft und/oder Fahrgeschwindigkeit des Fahrzeugs.

Die Steuereinheit ist vorteilhaft betreibbar, im Rahmen eines Vorgangs zur Steigerung der Traktion den Reifendruck zunächst vorzugsweise bis an eine Reifentragfähigkeitsgrenze abzusenken, um im Anschluss den Reifendruck einzustellen, für den eine maximale Triebkraft für eine gegebene Radlast gemessen wird.

Wird bereits vor Erreichen der Reifentragfähigkeitsgrenze von der Steuereinheit eine maximale Triebkraft für eine gegebene Radlast erkannt (insbesondere aufgrund Überschreiten eines Maximalwerts), so kann die Steuereinheit bevorzugt schon vor dem vollständigen Absenken auf die Reifentragfähigkeitsgrenze den Reifendruck einstellen, für den der maximale Traktionskoeffizient erreicht wird, um eine schnellere Anpassung zu erzielen.

Zur Erzielung einer hohen Flächenleistung ist vorteilhaft die Steuereinheit weiterhin betreibbar, bei einer erreichten Steigerung der Traktion die Fahrgeschwindigkeit des Fahrzeugs zu erhöhen. Insbesondere für Feldarbeiten bei denen eine gewisse Arbeitsgeschwindigkeit nicht überschritten werden darf, kann die Möglichkeit bestehen, eine Geschwindigkeitsgrenze festzulegen. Erreicht das Fahrzeug diese Geschwindigkeitsgrenze, kann auf weiterhin vorteilhafte Weise vorgesehen sein, dass die Steuereinheit selbsttätig in den zuvor beschriebenen Betriebsmodus mit dem Ziel hoher Effizienz des Fahrzeugs wechselt, um auf dem erreichten, nicht zu überschreitenden Geschwindigkeitsniveau möglichst effizient zu arbeiten.

Da die Kraftschlussbedingungen ständig variieren, ist es zweckmäßig, den Traktionskoeffizienten mittels der Sensorik laufend zu ermitteln, wobei sich die Steuereinheit an einem gebildeten Mittelwert orientiert. Ist der Reifendruck einmal eingestellt, entscheidet die Steuereinheit anhand von Änderungen der Lage des gemittelten Fahrwerkwirkungsgrads über dem Traktionskoeffizienten, ob es sinnvoll ist, den Reifendruck nachzuregeln.

Zur Realisierung der Regelstrategie Traktion ist die Kenntnis des Traktionskoeffizienten nötig. Es ist denkbar, die Traktion rad- oder achsindividuell oder für das Gesamtfahrzeug zu optimieren. Zudem ist es denkbar, die Traktionsbedingungen der Vorderachse zumindest teilweise aus den Werten der Hinterachse zu schätzen.

Gemäß einer vorteilhaften Weiterbildung des Fahrzeugs ist die Steuereinheit in einem Betriebsmodus betreibbar, in welchem die Steuereinheit den Reifendruck mit dem Ziel geringer Beanspruchung des Bodens regelt, insbesondere indem die Steuereinheit einen geringsten aufgrund von Radlast und Fahrgeschwindigkeit zulässigen Reifendruck einstellt. Zur Realisierung dieser Regelstrategie ist die Kenntnis von Fahrgeschwindigkeit, Reifendruck und Radlast erforderlich. Zweckmäßigerweise ist das Fahrzeug mit einer entsprechenden Sensorik ausgestattet.

Die zuvor beschriebenen Regelstrategien betreffen eine selbsttätige Einstellung des Reifendrucks durch die Steuereinheit gemäß einer auswählbaren Regelstrategie. Bevorzugt lässt sich die Steuereinheit daneben in eine manuelle Betriebsart bringen, in der sich ein vom Bediener gewünschter Reifendruck frei, beispielsweise als Zahlenwert (für den Luftdruck) - und somit unabhängig von den zuvor beschriebenen Regelstrategien- , einstellen lässt. Vorteilhaft können in diesem Zusammenhang auch ein oder mehrere Schnellwahltaster vorgesehen sein, unter denen der Bediener abgespeicherte Reifendruckwerte schnell und einfach abrufen kann. Beispielsweise könnte dabei eine allgemeine Schnellwahl für Straßenfahrt und eine allgemeine Schnellwahl für Feldfahrt vorgesehen sein.

Gemäß einer weiterhin bevorzugten Weiterbildung des Fahrzeugs ist die Steuereinheit betreibbar, das Überschreiten einer Reifentragfähigkeitsgrenze zu überwachen. Die Reifentragfähigkeitsgrenze stellt in diesem Zusammenhang eine übergeordnete Regelgrenze dar, um sicherzustellen, dass die Tragfähigkeit des Reifens, wie sie beispielsweise vom Hersteller für bestimmte Fahrgeschwindigkeiten und Radlasten angegeben wird, nicht überschritten wird. Die Überwachung der Regelgrenze kann grundsätzlich unabhängig von einem für die Reifendruckregelung gewählten Betriebsmodus und/oder unabhängig von der manuellen Betriebsart jederzeit erfolgen. Dabei ist es denkbar, dass die Steuereinrichtung bei Überschreiten der Reifentragfähigkeitsgrenze einen optischen und/oder akustischen Hinweis an den Bediener ausgibt und/oder dass die Steuereinrichtung ein Überschreiten der Reifentragfähigkeitsgrenze grundsätzlich verhindert. Es kann ergänzend vorgesehen sein, dass die Steuereinheit ein kurzzeitiges Überschreiten erlaubt, weil dies möglicherweise für den Reifen unkritisch ist. Daneben kann ein geduldetes Überschreiten der Tragfähigkeitsgrenze im Sinne einer z.B. zuschaltbaren Notfunktion vorgesehen sein, um beispielsweise ein festgefahrenes Fahrzeug wieder zu befreien.

Um das Überschreiten der Reifentragfähigkeitsgrenze zu überwachen, ist das Fahrzeug mit geeigneter Sensorik ausgestattet. Diese beinhaltet insbesondere Sensoren zur Erfassung von Fahrgeschwindigkeit, Radlast und Reifendruck des Fahrzeugs.

Das beschriebene Fahrzeug ermöglicht eine Unterstützung des Bedieners bei der Wahl eines geeigneten Reifendrucks durch eine elektronische Optimierung des Reifen-Boden-Kontakts. Dabei wird einerseits sichergestellt, dass die Reifentragfähigkeitsgrenze nicht überschritten wird, andererseits dass ein für gegebene Bedingungen optimaler Reifendruck entsprechend einer vom Bediener auswählbaren Regelstrategie eingestellt wird. Mögliche Regelstrategien zielen dabei ab auf Effizienz, Flächenleistung, Bodenschonung. Die Regelstrategie Effizienz kann zu Kraftstoffeinsparungen beitragen, indem bei Zugarbeiten auf dem Feld nicht zwangsläufig der minimale Reifendruck eingestellt wird, sondern der Reifendruck, mit dem sich der höchste Fahrwerkwirkungsgrad erzielen lässt.

Die Erfindung wird nachfolgend anhand eines Ausführungsbeispiels beschrieben. Daraus ergeben sich auch vorteilhafte Ausgestaltungsmöglichkeiten und Vorteile der Erfindung. In den Fig. zeigt:
- Fig. 1: einen Traktor in schematischer Seitenansicht,
- Fig. 2: eine beispielhafte Struktur für eine elektronische Traktionsoptimierung,
- Fig. 3: einen graphisch dargestellten Verlauf von Fahrwerkwirkungsgrad, Rollwiderstand, Schlupf abhängig vom Traktionskoeffizienten,
- Fig. 4: eine beispielhafte Optimierungssituation.

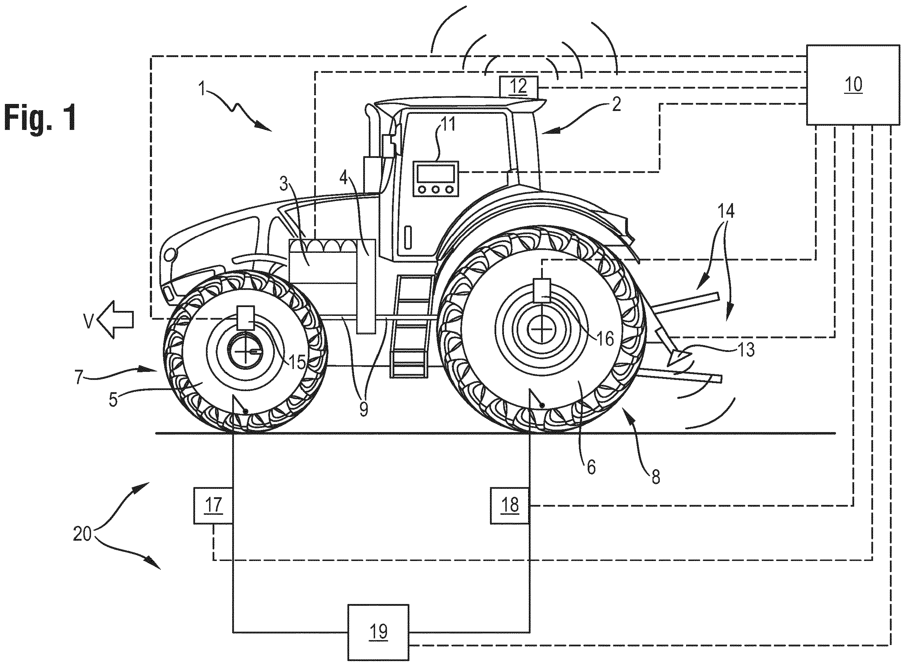

In Fig. 1 ist ein landwirtschaftliches Fahrzeug in Form eines Traktors 1 schematisch von der Seite dargestellt. Der Traktor 1 fährt mit einer Fahrgeschwindigkeit v in der angezeigten Richtung des Pfeils v über einen Untergrund (z.B. Feldboden, Straße). Dazu verfügt der Traktor 1 über einen Antriebsstrang, der insbesondere einen Antriebsmotor 3, ein Getriebe 4, Wellen 9, zwei Vorderräder 7 und zwei Hinterräder 8 umfasst. Die Komponenten wirken auf für sich bekannte Weise derart zusammen, dass eine vom Antriebsmotor 3 bereitgestellte Antriebsleistung auf die Vorderräder 7 und Hinterräder 8 übertragbar ist (abzüglich dabei auftretender Verluste), um den Traktor 1 gegenüber dem Untergrund in Bewegung zu versetzen. In vergleichbarere Weise könnte es sich bei dem Fahrzeug statt um einen Traktor um ein anderes landwirtschaftliches Fahrzeug handeln.

Die Vorderräder 7 und Hinterräder 8 des Traktors 1 sind jeweils mit einem Vorderreifen 5 bzw. Hinterreifen 6 ausgestattet. Die Vorderreifen 5 und Hinterreifen 6 sind über Druckleitungen (einschließlich hier nicht dargestellter Drehdurchführungen) mit einer pneumatischen Einrichtung 19 verbunden, die alle pneumatischen Komponenten umfasst, die zum Befüllen der Reifen 5, 6 mit Druckluft nötig sind (Kompressor, elektromagnetische Ventil- und/oder Schalteinrichtungen etc.). Damit bilden die Reifen 5, 6 mit den verbindenden Druckleitungen und der pneumatischen Einrichtung 19 eine Reifendruckbefüllanlage 20. Die Reifendruckbefüllanlage 20 ermöglicht ein Befüllen und auch ein Entlüften der Reifen 5, 6 des Traktors 1 während der Fahrt. Reifendruckbefüllanlagen mit derartiger Funktionalität sind dem Fachmann aus dem Stand der Technik in unterschiedlichen Ausführungen bekannt und brauchen hier nicht weiter erläutert zu werden.

Der Traktor 1 ist weiterhin mit einer elektronischen Steuereinheit 10 ausgestattet. Die elektronische Steuereinheit 10 ist mit einer in einer Fahrerkabine 2 des Traktors 1 angeordneten Bedien- und Anzeigeeinrichtung 11 verbunden. Somit lassen sich für einen Fahrer des Traktors 1 über die Bedien- und Anzeigeeinrichtung 11 in der Fahrerkabine 2 verschiedene von der Steuereinheit 10 bereitgestellte Informationen abrufen und anzeigen. Zugleich kann der Bediener über die Bedien- und Anzeigeeinrichtung 11 Einstellungen vornehmen, die als Eingabesignale in die Steuereinheit 10 eingehen. Welche Möglichkeiten sich daraus ergeben, wird nachfolgend erläutert werden.

Die Steuereinheit 10 ist weiterhin mit einer umfassenden Sensorik verbunden. Drucksensoren 17 und 18 übermitteln der Steuereinheit 10 den Reifendruck in den Vorderund Hinterreifen 5, 6. Weiterhin ist dem Hinterrad 8 eine Sensoranordnung 16 zugeordnet, die mit der Steuereinheit 10 verbunden ist. Mit der Sensoranordnung 16 lassen sich verschiedene auf das Hinterrad 8 bezogene Betriebsparameter wie dessen Drehzahl, Drehmoment, Radlast und Radtriebkraft erfassen. Für eine konstruktive Ausgestaltung dazu im einzelnen erforderlicher Sensoren sind verschiedene für sich bekannte Möglichkeiten denkbar (zeichnerisch nicht dargestellt). Dabei könnte - entsprechende Umrechnung vorausgesetzt - statt der Erfassung der Raddrehzahl eine Erfassung der Achsdrehzahl und/oder der Getriebeausgangsdrehzahl erfolgen, wenn dies konstruktiv günstiger erscheint. Analog könnte mit entsprechender Umrechnung statt des Raddrehmoments das Achsdrehmoment und/oder das Getriebeausgangsdrehmoment sensorisch erfasst werden. Statt der Radlast könnte die Achslast und/oder Gesamtlast des Traktors 1 erfasst werden. Statt der Radtriebkraft könnte die Achstriebkraft und/oder die Gesamtzugkraft des Traktors 1 erfasst werden. Dafür jeweils notwendige Sensortechnologien werden als bekannt angesehen und sind daher an dieser Stelle nicht näher zu erläutern.

Weiterhin ist dem Vorderrad 7 eine Sensoranordnung 15 zugeordnet, die mit der Steuereinheit 10 verbunden ist. Die Sensoranordnung 15 weist die gleiche Funktionalität wie die Sensoranordnung 16 auf, dient also zur Erfassung von Drehzahl, Drehmoment, Radlast und Radtriebkraft des Vorderrads 7. In gleicher Weise wie bei der Sensoranordnung 16 kann die Sensoranordnung 15 konstruktiv unterschiedlich ausgeführt sein. Dazu sei auf die vorigen Ausführungen bezüglich der Sensoranordnung 16 verwiesen.

Weiterhin ist die Steuereinheit 10 mit einer Sensorik zur Erfassung der Geschwindigkeit v des Traktors 1 verbunden. Der Traktor 1 ist gemäß dem gezeigten Ausführungsbeispiel dazu mit zwei System zur Geschwindigkeitserfassung ausgestattet. An einem Heckhubwerk 14 des Traktors 1 ist ein Radarsensor 13 angeordnet, der durch Abtastung des Bodens die Fahrgeschwindigkeit v des Traktors 1 bestimmt und an die Steuereinheit 10 übermittelt. Ergänzend ist an der Fahrerkabine 2 eine Navigationseinrichtung 12 angeordnet, die unter Nutzung satellitengestützter Positionsbestimmung (z.B. GPS) die Fahrgeschwindigkeit v des Traktors 1 bestimmt und an die Steuereinheit 10 übermittelt. Es kann ausreichen, dass der Traktor 1 mit einer der beschriebenen Möglichkeiten der Geschwindigkeitsermittlung ausgestattet ist.

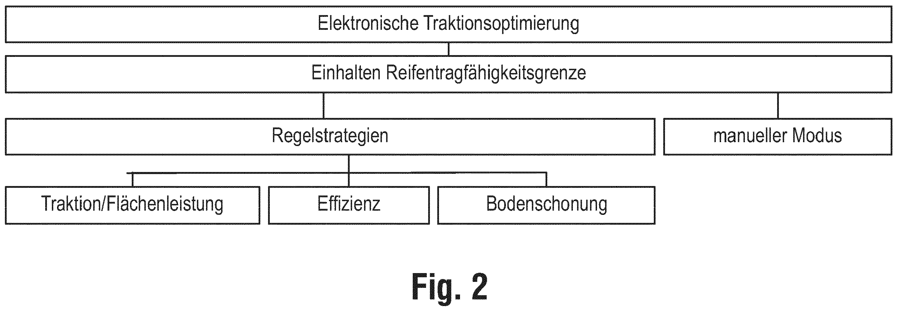

An dem Traktor 1 lässt sich der Reifendruck in den Vorder- und Hinterreifen 5, 6 auf folgende Weise regeln. Ein Bediener des Traktors 1 steht über die Bedien- und Anzeigeeinrichtung 11 mit der Steuereinheit 10 in Dialog. Dabei kann der Bediener durch Auswahlmöglichkeiten die Steuereinheit 10 in verschiedenen Betriebsmodi betreiben. Die Auswahl eines Betriebsmodus hat zur Folge, dass die Steuereinheit 10 den Reifendruck dann unter Berücksichtigung einer diesem Betriebsmodus zugeordneten Regelstrategie regeln wird. Hierzu sei auf Fig. 2 verwiesen, welche eine bevorzugte Auswahlstruktur zeigt. Demnach hat der Bediener die Möglichkeit, zwischen drei verschiedenen Regelstrategien (Effizienz, Traktion, Bodenschonung) zu wählen, was einem Betrieb der Steuereinheit 10 in drei verschiedenen Betriebsmodi entspricht. Durch Auswahl einer dieser drei Regelstrategien wird die Steuereinheit 10 den Reifendruck des Traktors 1 unter Berücksichtigung einer in dieser Regelstrategie festgelegten Zielsetzung selbsttätig regeln und dazu unter weiterer Berücksichtigung der zur Verfügung stehenden Sensorsignale einen geeigneten Reifendruck für die Reifen 5, 6 ermitteln und diesen durch Ansteuerung der pneumatischen Einrichtung 19 einstellen. Der Bediener ist nach Auswahl der Regelstrategie somit von der weiteren Überwachung bzw. Einstellung des Reifendrucks entlastet.

Daneben hat der Bediener die Möglichkeit, die Steuereinheit 10 in einen manuellen Modus zu schalten. In der manuellen Betriebsart lässt sich vom Bediener ein Reifendruck frei vorgeben. Die Steuereinheit 10 sorgt in diesem Fall durch Ansteuerung der pneumatischen Einrichtung 19 für eine Einstellung des gewünschten Reifendrucks in den Reifen 5, 6.

Der Fig. 2 lässt sich weiterhin das Vorhandensein einer übergeordneten Regelgrenze entnehmen. Diese beinhaltet, dass sowohl im automatischen Regelbetrieb, d.h. bei Aktivierung einer der drei Regelstrategien als auch im manuellen Modus die Steuereinheit 10 eine Überwachung durchführt, die eine laufende Kontrolle des Überschreitens der Reifentragfähigkeitsgrenze beinhaltet, d.h. dem minimal zulässigen Reifendruck, welcher für eine bestimmte Radlast und Fahrgeschwindigkeit des Fahrzeugs noch zulässig ist. Bevorzugt erfolgt dies in der Weise, dass bei Aktivierung einer der drei Regelstrategien ein Überschreiten der Reifentragfähigkeitsgrenze vollständig verhindert wird, indem die Steuereinheit 10 den Reifendruck gegebenenfalls selbsttätig auf ein ausreichendes Niveau bringt. Bei manueller Betriebsart erfolgt die Überwachung in der Weise, dass der Bediener bei Überschreiten der Reifentragfähigkeitsgrenze über die Bedien- und Anzeigeeinrichtung 11 optisch und ggf. akustisch gewarnt wird. Auch hier wäre ein selbsttätiges Verhindern durch die Steuereinheit 10 denkbar.

Wird die Regelstrategie "Effizienz" gewählt, regelt die Steuereinheit 10 den Reifendruck mit dem Ziel, dass Zugarbeiten des Traktors 1 (insbesondere auf dem Feld) mit maximaler Effizienz, insbesondere mit möglichst geringem Kraftstoffverbrauch durchgeführt werden. Dabei spielt insbesondere der sogenannte Fahrwerkwirkungsgrad (Verhältnis aus Zugleistung des Traktors 1 gegenüber der mechanischen Eingangsleistung des Fahrwerks) eine entscheidende Rolle, dessen Komponenten Zugleistung und Eingangsleistung des Fahrwerks dazu sensorisch ermittelt werden. Der sich anschließende Optimierungsprozess beinhaltet zumindest einen ersten, optional auch einen zweiten Schritt:
In dem ersten Schritt wird für die gegebenen Bedingungen der optimale Reifendruck ermittelt (z.B. radindividuell oder achsindividuell). Dazu wird durch Ansteuerung durch die Steuereinheit 10 zunächst der Reifendruck auf die Reifentragfähigkeitsgrenze (abhängig Geschwindigkeit v und Radlast, erfasst mit Sensoren 12, 13 bzw. 15, 16) abgesenkt. Im Anschluss wird der Reifendruck eingestellt, für welchen ein maximaler Fahrwerkwirkungsgrad gemessen wurde. Dies muss nicht unbedingt der minimal aufgrund der Reifentragfähigkeit mögliche Reifendruck sein.

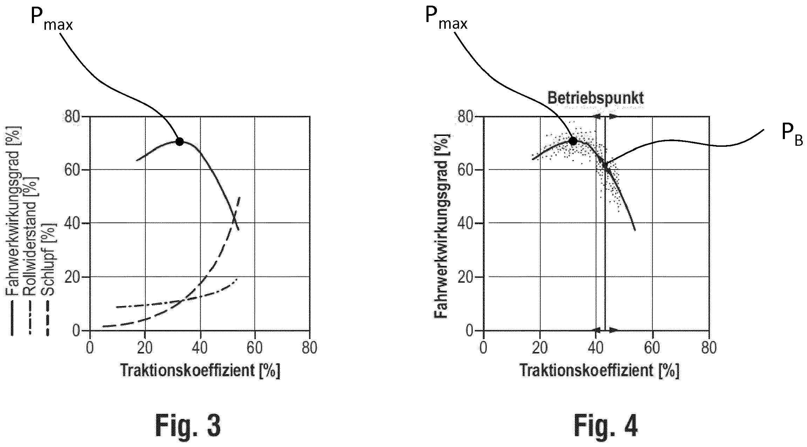

In diesem Zusammenhang sei auf die Fig. 3 verwiesen, die in graphischer Darstellung die Betriebseigenschaften eines Traktorreifens qualitativ wiedergibt. Aufgetragen sind der Verlauf des Fahrwerkwirkungsgrads (durchgehende Linie), des Rollwiderstands (Strich-Punkt-Linie) und des Schlupfes (gestrichelte Linie) in Abhängigkeit des Traktionskoeffizienten. Vorteilhaft an der Darstellung ist, dass damit die technisch besonders interessierenden Zusammenhänge aus Triebkraft und Effizienz durch einen einzigen Kurvenzug (den des Fahrwerkwirkungsgrads) charakterisiert werden. Bei dem Traktionskoeffizienten handelt es sich dabei - entsprechende Sensorik vorausgesetzt - um eine direkt messbare Größe, da sich dieser aus dem Verhältnis von Triebkraft gegenüber zugehöriger Radlast bestimmt. Der Traktionskoeffizient ist somit über die Sensoren 15 bzw. 16 ermittelbar. Bei dem Fahrwerkwirkungsgrad handelt es sich ebenfalls - entsprechende Sensorik vorausgesetzt - um eine direkt messbare Größe, da sich dieser aus dem Verhältnis aus Zugleistung des Fahrzeugs gegenüber der mechanischen Eingangsleistung des Fahrwerks bestimmt. Wie der Darstellung der Fig. 3 zu entnehmen, weist der Verlauf des Fahrwerkwirkungsgrads über vom Traktionskoeffizienten ein Maximum Pₘₐₓ auf. Demnach steigt der Fahrwerkwirkungsgrad mit zunehmendem Traktionskoeffizienten zunächst bis zum Erreichen dieses Maximums Pₘₐₓ (hier bei einem Traktionskoeffizienten von etwa 30% bis 40%), fällt jedoch mit weiterhin steigendem Traktionskoeffizienten wieder stark ab.

Da die Kraftschlussbedingungen in der Praxis (d.h. bei Feldfahrt des Traktors 1) laufend variieren, wird der Fahrwerkwirkungsgrad vorzugsweise laufend ermittelt und die Steuereinheit 10 orientiert sich dann am Mittelwert. Hierzu sei auf die Darstellung gemäß Fig. 4 verwiesen, welche in einer Graphik (Darstellung des Fahrwerkwirkungsgrads über dem Traktionskoeffizient) die Mittelwertbildung der Fahrwerkwirkungsgradkurve aus einzelnen Messpunkten zeigt. Ist der Reifendruck einmal eingestellt, entscheidet die Steuereinheit 10 anhand von Änderungen der Lage des gemittelten Fahrwerkwirkungsgrads über dem Traktionskoeffizienten, ob es sinnvoll ist, den Reifendruck nachzuregeln. Eventuell kann der zu einem Fahrwerkwirkungsgrad und Traktionskoeffizient zugehörige Schlupf einen Hinweis für eine erneute Anpassung geben.
In einem optionalen zweiten Schritt kann, wenn dies zulässig ist, die Steuereinheit 10 durch Ansteuerung eines Fahrreglers (angedeutet durch Signalleitung von Steuereinheit 10 zum Antriebsmotor 3 bzw. Getriebe 4) die Fahrgeschwindigkeit v des Traktors 1 variieren, um einen Betriebspunkt P_{B} (siehe Fig. 4) in den Bereich eines maximalen Fahrwerkwirkungsgrads zu verschieben. Dieser "Zielbetriebspunkt" (mit maximalem Fahrwerkwirkungsgrad) ist in Fig. 4 wieder mit Pₘₐₓ bezeichnet. Der Verlauf des Fahrwerkwirkungsgrads über dem Traktionskoeffizienten ist bereichsweise bekannt, da der Traktionskoeffizient bei Zugarbeiten auf dem Feld z.B. durch Variation der Arbeitstiefe eines Anbaugeräts und der Bodenfestigkeit schwankt, der Betriebspunkt P_{B} sich also im Kennfeld hin und her bewegt. Zudem wird beim Absenken eines Anbaugeräts in den Boden am Vorgewende ein großer Teil der Traktionskoeffizienten-Fahrwerkwirkungsgrad-Kurve durchlaufen. Die Steuereinheit 10 kann also durch Kenntnis des Kurvenverlaufs des gemittelten Fahrwerkwirkungsgrads über dem Traktionskoeffizienten den Betriebspunkt P_{B} durch Variation der Fahrgeschwindigkeit v verschieben, so dass dieser im Bereich des maximalen Fahrwerkwirkungsgrads Pₘₐₓ liegt. Dabei führt eine Verringerung der Fahrgeschwindigkeit v zur Abnahme der erforderlichen Zugkraft und damit des Traktionskoeffizienten, während eine Erhöhung der Fahrgeschwindigkeit v eine Zunahme von Zugkraft und Traktionskoeffizienten bedingt. Die Steuereinheit 10 könnte dem Bediener ein Verringern oder Erhöhen der Fahrgeschwindigkeit v bei gleichzeitiger Visualisierung (per Anzeigeeinrichtung 11) des Fahrwerkwirkungsgrads empfehlen, oder aber durch direkten Zugriff auf den Fahrregler selbsttätig einregeln.

Daneben wäre es denkbar, dass die Steuereinheit 10 den Betriebspunkt in einen vom Bediener definierten Abstand vom Maximum des Fahrwerkwirkungsgrads einregelt, der einen guten Kompromiss aus Wirkungsgrad der Kraftübertragung und Flächenleistung darstellt.

Um die Regelstrategie "Effizienz" zu realisieren, ermittelt die Steuereinheit 10 den Fahrwerkwirkungsgrad und den Traktionskoeffizient. Eine Optimierung der Traktion kann radweise, achsindividuell oder für das Gesamtfahrzeug erfolgen. Zudem ist es denkbar, dass die Steuereinheit 10 die Traktionsbedingungen der Vorderachse zumindest teilweise aus den Werten für die Hinterachse schätzt.

Wird die Regelstrategie "Traktion" gewählt, regelt die Steuereinheit 10 den Reifendruck mit dem Ziel, dass bei Zugarbeiten auf dem Feld eine maximale Flächenleistung erreicht wird. Dazu optimiert die Steuereinheit 10 die Zugkraft für die gegebenen Bedingungen. In diesem Zusammenhang spielt insbesondere der bereits zuvor erläuterte Traktionskoeffizient eine entscheidende Rolle.

Die Steuereinheit 10 ermittelt dabei für die gegebenen Bedingungen einen optimalen Reifendruck (z.B. radindividuell oder achsindividuell). Dazu wird durch Ansteuerung durch die Steuereinheit 10 zunächst der Reifendruck auf die Reifentragfähigkeitsgrenze (abhängig Geschwindigkeit v und Radlast, erfasst mit Sensoren 12, 13 bzw. 15, 16) abgesenkt. Im Anschluss wird der Reifendruck eingestellt, für welchen sich maximale Triebkräfte über der Radlast, d.h. ein maximaler Traktionskoeffizient) ergeben. Ein so erreichter Traktionsgewinn kann dann genutzt werden, um die Fahrgeschwindigkeit v zu erhöhen. Für Feldarbeiten, bei denen eine gewisse Fahrgeschwindigkeit nicht überschritten werden darf, hat der Bediener die Möglichkeit, eine Geschwindigkeitsgrenze festzulegen. Erreicht der Traktor 1 diese, wird gemäß der Regelstrategie "Effizienz" der Fahrwerkwirkungsgrad maximiert.

Da die Kraftschlussbedingungen in der Praxis (d.h. bei Feldfahrt des Traktors 1) laufend variieren, wird der Traktionskoeffizient vorzugsweise laufend ermittelt und die Steuereinheit 10 orientiert sich dann am Mittelwert. Ist der Reifendruck einmal eingestellt, entscheidet die Steuereinheit 10 anhand von Änderungen der Lage des gemittelten Fahrwerkwirkungsgrads über dem Traktionskoeffizienten, ob es sinnvoll ist, den Reifendruck nachzuregeln. Eventuell kann der zu einem Fahrwerkwirkungsgrad und Traktionskoeffizient zugehörige Schlupf einen Hinweis für eine erneute Anpassung geben.

Um die Regelstrategie "Traktion" zu realisieren, ermittelt die Steuereinheit 10 den Fahrwerkwirkungsgrad und den Traktionskoeffizient. Eine Optimierung der Traktion kann radweise, achsindividuell oder für das Gesamtfahrzeug erfolgen. Zudem ist es denkbar, dass die Steuereinheit 10 die Traktionsbedingungen der Vorderachse zumindest teilweise aus den Werten für die Hinterachse schätzt.

Wird die Regelstrategie "Bodenschonung" gewählt, regelt die Steuereinheit 10 den Reifendruck mit dem Ziel, dass Arbeiten auf dem Feld mit minimaler Beanspruchung, insbesondere Verdichtung des Bodens erfolgen. Dazu steuert die Steuereinheit 10 die pneumatische Einrichtung 19 so an, dass - entsprechend der übergeordneten Regelgrenze - der geringste aufgrund von Radlast und Fahrgeschwindigkeit v zulässige Reifendruck eingestellt wird.

Um die Regelstrategie "Bodenschonung" zu realisieren, berücksichtigt die Steuereinheit 10 die Fahrgeschwindigkeit und die Radlast. Eine Optimierung kann radweise, achsindividuell oder für das Gesamtfahrzeug erfolgen. Zudem ist es denkbar, dass die Steuereinheit 10 die Bedingungen der Vorderachse zumindest teilweise aus den Werten für die Hinterachse schätzt.

### Bezugszeichenliste

- 1: Traktor
- 2: Fahrerkabine
- 3: Antriebsmotor
- 4: Getriebe
- 5: Vorderreifen
- 6: Hinterreifen
- 7: Vorderrad
- 8: Hinterrad
- 9: Welle
- 10: elektronische Steuereinheit
- 11: Anzeige- und Bedieneinrichtung
- 12: Navigationseinrichtung
- 13: Radarsensor
- 14: Heckhubwerk
- 15: Sensoranordnung
- 16: Sensoranordnung
- 17: Drucksensor
- 18: Drucksensor
- 19: pneumatische Einrichtung
- 20: Reifendruckbefüllanlage

- v: Fahrgeschwindigkeit
- P_{B}: Betriebspunkt
- Pₘₐₓ: Betriebspunkt maximaler Effizienz

## Patentansprüche

1. Landwirtschaftliches Fahrzeug (1) mit einer Reifendruckbefüllanlage (20) sowie einer Steuereinheit (10) zur Einstellung des Reifendrucks des Fahrzeugs (1) in Abhängigkeit sensorisch erfasster Betriebsparameter des Fahrzeugs, wobei die Steuereinheit (10) in verschiedenen, von einem Bediener auswählbaren Betriebsmodi betreibbar ist, wobei durch Auswahl eines der Betriebsmodi der Reifendruck unter Berücksichtigung einer diesem Betriebsmodus zugeordneten Regelstrategie geregelt wird, dadur ch gekennzeichnet, dass
das Fahrzeug (1) über Mittel (12, 13, 15, 16) zur Erfassung eines Fahrwerkwirkungsgrads und eines Traktionskoeffizienten verfügt und die Steuereinheit (10) zumindest in einem Betriebsmodus betreibbar ist, in welchem die Steuereinheit (10) den Reifendruck mit dem Ziel hoher Effizienz des Fahrzeugs regelt oder in einem Betriebsmodus, in welchem die Steuereinheit (10) den Reifendruck mit dem Ziel hoher Traktion des Fahrzeugs (1) regelt.

2. Fahrzeug nach Anspruch 1, **dadurch gekennzeichnet, dass** die Steuereinheit (10) im Rahmen eines Vorgangs zur Effizienzsteigerung betreibbar ist, unter Berücksichtigung der Reifentragfähigkeitsgrenze einen Reifendruck einzustellen, für den sich ein maximaler Fahrwerkwirkungsgrad über dem Traktionskoeffizienten ergibt.

3. Fahrzeug nach Anspruch 1 oder 2, **dadurch gekennzeichnet, dass** die Steuereinheit (10) betreibbar ist, im Rahmen eines Vorgangs zur Effizienzsteigerung den Reifendruck zunächst insbesondere bis an eine Reifentragfähigkeitsgrenze abzusenken, um im Anschluss den Reifendruck einzustellen, für den ein maximaler Fahrwerkwirkungsgrad gemessen wird.

4. Fahrzeug nach Anspruch 2 oder 3, **dadurch gekennzeichnet, dass** die Steuereinheit (10) betreibbar ist, durch Vorgabe einer Fahrgeschwindigkeit (v) das Fahrzeug (1) in einem Betriebspunkt mit maximalem Fahrwerkwirkungsgrad zu betreiben.

5. Fahrzeug nach einem der Ansprüche 2 bis 4, **dadurch gekennzeichnet, dass** die Steuereinheit (10) betreibbar ist, durch Vorgabe einer Fahrgeschwindigkeit (v) das Fahrzeug (1) in einem Betriebspunkt mit festlegbarem Abstand zum maximalen Fahrwerkwirkungsgrad zu betreiben.

6. Fahrzeug nach Anspruch 1, **dadurch gekennzeichnet, dass** dieses über Mittel zur Erfassung eines Traktionskoeffizienten verfügt, wobei die Steuereinheit (10) im Rahmen eines Vorgangs zur Steigerung der Traktion betreibbar ist, unter Berücksichtigung der Reifentragfähigkeitsgrenze einen Reifendruck einzustellen, für den sich eine maximale Triebkraft für eine gegebene Radlast ergibt.

7. Fahrzeug nach Anspruch 1 oder 6, **dadurch gekennzeichnet, dass** die Steuereinheit (10) betreibbar ist, im Rahmen eines Vorgangs zur Steigerung der Traktion den Reifendruck zunächst insbesondere bis an eine Reifentragfähigkeitsgrenze abzusenken, um im Anschluss den Reifendruck einzustellen, für den eine maximale Triebkraft für eine gegebene Radlast gemessen wird.

8. Fahrzeug nach Anspruch 6 oder 7, **dadurch gekennzeichnet, dass** die Steuereinheit (10) betreibbar ist, bei einer erreichten Steigerung der Traktion die Fahrgeschwindigkeit (v) des Fahrzeugs (1) zu erhöhen, insbesondere bis zum Erreichen einer vorgebbaren Geschwindigkeitsgrenze.

9. Fahrzeug nach Anspruch 8, **dadurch gekennzeichnet, dass** die Steuereinheit (10) betreibbar ist, bei Erreichen der vorgebbaren Geschwindigkeitsgrenze selbsttätig in den Betriebsmodus mit dem Ziel hoher Effizienz des Fahrzeugs (1) zu wechseln.

10. Fahrzeug nach einem der Ansprüche 1 bis 9, **dadurch gekennzeichnet, dass** die Steuereinheit insbesondere im Betriebsmodus mit dem Ziel hoher Effizienz und/oder im Betriebsmodus mit dem Ziel hoher Traktion weiterhin betreibbar ist anhand von Änderungen der Lage des gemittelten Fahrwerkwirkungsgrads über dem Traktionskoeffizienten den Reifendruck nachzuregeln, wobei insbesondere ein zugehöriger Schlupf einen Hinweis für eine derartige Anpassung gibt.

11. Fahrzeug nach einem der vorigen Ansprüche, **dadurch gekennzeichnet, dass** die Steuereinheit (10) in einem Betriebsmodus betreibbar ist, in welchem die Steuereinheit (10) den Reifendruck mit dem Ziel geringer Beanspruchung des Bodens regelt, insbesondere indem die Steuereinheit (10) einen geringsten aufgrund von Radlast und Fahrgeschwindigkeit (v) zulässigen Reifendruck einstellt.

12. Fahrzeug nach einem der vorigen Ansprüche, **dadurch gekennzeichnet, dass** die einem Betriebsmodus zugrunde liegende Regelstrategie eine rad-, achs- und/oder gesamtfahrzeugmäßige Optimierung beinhaltet.

13. Fahrzeug nach einem der vorigen Ansprüche, **dadurch gekennzeichnet, dass** die Steuereinheit (10) in eine manuelle Betriebsart bringbar ist, in der sich ein vom Bediener gewünschter Reifendruck frei einstellen lässt.

14. Fahrzeug nach einem der vorigen Ansprüche, **dadurch gekennzeichnet, dass** die Steuereinheit (10) betreibbar ist, das Überschreiten einer Reifentragfähigkeitsgrenze zu überwachen, insbesondere indem die Steuereinrichtung (10) bei Überschreiten der Reifentragfähigkeitsgrenze einen optischen und/oder akustischen Hinweis an den Bediener ausgibt und/oder indem die Steuereinrichtung (10) ein Überschreiten der Reifentragfähigkeitsgrenze grundsätzlich verhindert.

## Claims

1. An agricultural vehicle (1) with a tyre pressure replenishing unit (20) as well as a control unit (10) for adjusting the tyre pressure of the vehicle (1) as a function of sensor-detected operating parameters of the vehicle, wherein the control unit (10) can be operated in different operating modes which can be selected by an operator wherein, by selecting one of the operating modes, the tyre pressure can be adjusted on the basis of a control strategy associated with that operating mode, **characterized in that**
the vehicle (1) is provided with means (12, 13, 15, 16) for detecting a chassis efficiency and a traction coefficient and the control unit (10) can be operated in at least one operating mode in which the control unit (10) adjusts the tyre pressure with the aim of higher efficiency of the vehicle, or in an operating mode in which the control unit (10) adjusts the tyre pressure with the aim of higher traction of the vehicle (1).

2. The vehicle according to claim 1, **characterized in that** in the context of a procedure for increasing the efficiency, the control unit (10) can be operated to set a tyre pressure on the basis of the tyre load rating limit for which tyre pressure a maximum chassis efficiency over the traction coefficient is generated.

3. The vehicle according to claim 1 or claim 2, **characterized in that** in the context of a procedure for increasing the efficiency, the control unit (10) can be operated to initially drop the tyre pressure in particular to a tyre load rating limit, in order to then set the tyre pressure for which a maximum chassis efficiency is measured.

4. The vehicle according to claim 2 or claim 3, **characterized in that** by specifying a drive speed (v), the control unit (10) can be operated so that the vehicle (1) is operated at an operating point with maximum chassis efficiency.

5. The vehicle according to one of claims 2 to 4, **characterized in that** by specifying a drive speed (v), the control unit (10) can be operated so that the vehicle (1) is operated at an operating point which deviates from the maximum chassis efficiency by an amount which can be specified.

6. The vehicle according to claim 1, **characterized in that** it is provided with means for detecting a traction coefficient, wherein the control unit (10) can be operated in the context of a procedure for increasing the traction, on the basis of the tyre load rating limit, to set a tyre pressure for which a maximum motive force is obtained for a given wheel load.

7. The vehicle according to claim 1 or claim 6, **characterized in that** in the context of a procedure for increasing the traction, the control unit (10) can be operated to initially drop the tyre pressure, in particular to a tyre load rating limit, in order to then adjust the tyre pressure for which a maximum motive force is measured for a given wheel load.

8. The vehicle according to claim 6 or claim 7, **characterized in that** the control unit (10) can be operated to increase the drive speed (v) of the vehicle (1) when the traction has been increased, in particular until a speed limit which can be specified has been reached.

9. The vehicle according to claim 8, **characterized in that** the control unit (10) can be operated such that when the speed limit which can be specified has been reached, it automatically changes into the operating mode which is aimed at higher efficiency of the vehicle (1).

10. The vehicle according to one of claims 1 to 9, **characterized in that** in particular in the operating mode which is aimed at higher efficiency and/or in the operating mode which is aimed at higher traction, the control unit can be further operated to readjust the tyre pressure with the aid of changes in the position of the averaged chassis efficiency by means of the traction coefficients, wherein in particular, associated skidding provides an indication for an adjustment of this type.

11. The vehicle according to one of the preceding claims, **characterized in that** the control unit (10) can be operated in an operating mode in which the control unit (10) adjusts the tyre pressure with the aim of a lower stress on the ground, in particular so that the control unit (10) sets a lowest permissible tyre pressure on the basis of the wheel load and drive speed (v).

12. The vehicle according to one of the preceding claims, **characterized in that** the control strategy forming the basis of an operating mode entails a wheel, axle and/or whole vehicle-based optimization.

13. The vehicle according to one of the preceding claims, **characterized in that** the control unit (10) can be brought into a manual operational mode in which a tyre pressure which is desired by the operator can be freely set.

14. The vehicle according to one of the preceding claims, **characterized in that** the control unit (10) can be operated so as to monitor exceeding of a tyre load rating limit, in particular so that when the tyre load rating limit is exceeded, the control unit (10) outputs an optical and/or acoustic indication to the operator and/or so that the control unit (10) categorically prevents the tyre load rating limit from being exceeded.

## Revendications

1. Véhicule agricole (1) comprenant une installation de remplissage de pression de pneumatiques (20) ainsi qu'une unité de commande (10) pour établir la pression de pneumatiques du véhicule (1) en fonction de paramètres d'exploitation du véhicule détectés par capteurs, l'unité de commande (10) pouvant fonctionner dans divers modes de fonctionnement sélectionnables par l'utilisateur, la sélection d'un des modes de fonctionnement permettant de réguler la pression de pneumatiques en tenant compte d'une stratégie de régulation associée à un mode de fonctionnement, **caractérisé en ce que** le véhicule (1) dispose de moyens (12, 13, 15, 16) pour détecter un rendement de train de roulement et un coefficient de traction, et l'unité de commande (10) peut fonctionner au moins dans un mode de fonctionnement dans lequel l'unité de commande (10) régule la pression de pneumatiques dans le but d'une efficience élevée du véhicule ou dans un mode de fonctionnement dans lequel l'unité de commande (10) régule la pression de pneumatiques dans le but d'une traction élevée du véhicule (1).

2. Véhicule selon la revendication 1, **caractérisé en ce que** l'unité de commande (10) peut fonctionner dans le cadre d'un processus d'augmentation de l'efficience pour, en tenant compte d'une limite de capacité de charge des pneumatiques, établir une pression de pneumatiques pour laquelle est obtenu un rendement de train de roulement maximal supérieur au coefficient de traction.

3. Véhicule selon la revendication 1 ou 2, **caractérisé en ce que** l'unité de commande (10) peut fonctionner pour, dans le cadre d'un processus d'augmentation de l'efficience, abaisser la pression de pneumatiques d'abord en particulier jusqu'à une limite de capacité de charge des pneumatiques afin d'établir ensuite la pression de pneumatiques pour laquelle est mesuré un rendement de train de roulement maximal.

4. Véhicule selon la revendication 2 ou 3, **caractérisé en ce que** l'unité de commande (10) peut fonctionner pour, par la prescription d'une vitesse de marche (v), faire fonctionner le véhicule (1) à un point de fonctionnement avec un rendement de train de roulement maximal.

5. Véhicule selon une des revendications 2 à 4, **caractérisé en ce que** l'unité de commande (10) peut fonctionner pour, par la prescription d'une vitesse de marche (v), faire fonctionner le véhicule (1) à un point de fonctionnement avec un écart définissable par rapport au rendement de train de roulement maximal.

6. Véhicule selon la revendication 1, **caractérisé en ce qu'**il dispose de moyens pour détecter un coefficient de traction, l'unité de commande (10) pouvant fonctionner dans le cadre d'un processus d'augmentation de la traction pour, en tenant compte de la limite de capacité de charge des pneumatiques, établir une pression de pneumatiques pour laquelle est obtenue une force motrice maximale pour une charge de roues donnée.

7. Véhicule selon la revendication 1 ou 6, **caractérisé en ce que** l'unité de commande (10) peut fonctionner pour, dans le cadre d'un processus d'augmentation de la traction, abaisser la pression de pneumatiques d'abord en particulier jusqu'à une limite de capacité de charge des pneumatiques afin d'établir ensuite la pression de pneumatiques pour laquelle est mesurée une force motrice maximale pour une charge de roues donnée.

8. Véhicule selon la revendication 6 ou 7, **caractérisé en ce que** l'unité de commande (10) peut fonctionner pour, lorsque l'accroissement de la traction est atteint, augmenter la vitesse de marche (v) du véhicule (1), en particulier jusqu'à atteindre une limite de vitesse prescriptible.

9. Véhicule selon la revendication 8, **caractérisé en ce que** l'unité de commande (10) peut fonctionner pour, lorsqu'une limite de vitesse prescriptible est atteinte, passer automatiquement dans un mode de fonctionnement dans le but d'une efficience élevée du véhicule (1).

10. Véhicule selon une des revendications 1 à 9, **caractérisé en ce que** l'unité de commande peut également fonctionner en particulier en mode de fonctionnement dans le but d'une efficience élevée et/ou en mode de fonctionnement dans le but d'une traction élevée afin de corriger la pression de pneumatiques à l'aide de modifications de la position du rendement de train de roulement moyen au-dessus du coefficient de traction, en particulier un glissement associé fournissant une indication sur une adaptation de ce type.

11. Véhicule selon une des revendications précédentes, **caractérisé en ce que** l'unité de commande (10) peut fonctionner dans un mode de fonctionnement dans lequel l'unité de commande (10) régule la pression de pneumatiques dans le but d'une moindre sollicitation du sol, en particulier par le fait que l'unité de commande (10) établit une pression de pneumatiques minimale autorisée en fonction de la charge de roues et de la vitesse de marche (v).

12. Véhicule selon une des revendications précédentes, **caractérisé en ce que** la stratégie de régulation servant de base à un mode de fonctionnement inclut une optimisation relative aux roues, aux essieux et/ou à l'ensemble du véhicule.

13. Véhicule selon une des revendications précédentes, **caractérisé en ce que** l'unité de commande (10) peut être amenée dans un type de fonctionnement manuel dans lequel une pression de pneumatiques souhaitée par l'utilisateur peut être établie librement.

14. Véhicule selon une des revendications précédentes, **caractérisé en ce que** l'unité de commande (10) peut fonctionner pour surveiller le surpassement d'une limite de capacité de charge des pneumatiques, en particulier par le fait qu'en cas de surpassement de la limite de capacité de charge des pneumatiques, l'équipement de commande (10) fournit à l'utilisateur une indication optique et/ou acoustique et/ou par le fait que l'équipement de réglage (10) interdit dans son principe un surpassement de la limite de capacité de charge des pneumatiques.
